# EUROPEAN PATENT SPECIFICATION

(11) **EP 4 376 124 B1**
(45) Date of publication and mention of the grant of the patent: **05.11.2025**
(21) Application number: 22867606.0
(22) Date of filing: 25.08.2022
(51) Int. Cl.: H01M 4/36, H01M 4/38, H01M 4/62, H01M 10/052, H01M 4/02

(54) **SILICON-BASED ANODE ACTIVE MATERIAL, METHOD FOR PREPARING SILICON-BASED ANODE ACTIVE MATERIAL, ANODE COMPRISING SILICON-BASED ANODE ACTIVE MATERIAL, AND SECONDARY BATTERY COMPRISING ANODE**
ANODENAKTIVMATERIAL AUF SILICIUMBASIS, VERFAHREN ZUR HERSTELLUNG EINES ANODENAKTIVMATERIALS AUF SILICIUMBASIS, ANODE MIT ANODENAKTIVMATERIAL AUF SILICIUMBASIS UND SEKUNDÄRBATTERIE MIT ANODE
MATÉRIAU ACTIF D'ANODE À BASE DE SILICIUM, PROCÉDÉ DE PRÉPARATION DE MATÉRIAU ACTIF D'ANODE À BASE DE SILICIUM, ANODE COMPRENANT UN MATÉRIAU ACTIF D'ANODE À BASE DE SILICIUM ET BATTERIE SECONDAIRE COMPRENANT UNE ANODE

(30) Priority: 09.09.2021 KR 20210120515
(43) Date of publication of application: 29.05.2024
(73) Proprietor: LG ENERGY SOLUTION, LTD., Seoul 07335 (KR)
(72) Inventor: JUN, Hyun Min, Daejeon 34122 (KR); KIM, Dong Hyuk, Daejeon 34122 (KR); LEE, Yong Ju, Daejeon 34122 (KR)
(74) Representative: Hoffmann Eitle
(86) International application number: PCT/KR2022/012759
(87) International publication number: WO 2023/038337

(56) References cited:
- CN-A- 112 164 791
- KR-A- 20200 049 626
- KR-A- 20210 079 442
- LI XIN, CHEN ZHIYU, LI ANG, YU YINGCHUN, CHEN XIAOHONG, SONG HUAIHE: "Three-Dimensional Hierarchical Porous Structures Constructed by Two-Stage MXene-Wrapped Si Nanoparticles for Li-Ion Batteries", APPLIED MATERIALS & INTERFACES, AMERICAN CHEMICAL SOCIETY, US, vol. 12, no. 43, 28 October 2020 (2020-10-28), US , pages 48718 - 48728, XP093045161, ISSN: 1944-8244, DOI: 10.1021/acsami.0c15527
- CAO DONG, REN MINGXI, XIONG JIE, PAN LIMEI, WANG YI, JI XINZHE, QIU TAI, YANG JIAN, ZHANG CHUANFANG (JOHN): "Self-assembly of hierarchical Ti3C2Tx-CNT/SiNPs resilient films for high performance lithium ion battery electrodes", ELECTROCHIMICA ACTA, ELSEVIER, AMSTERDAM, NL, vol. 348, 1 July 2020 (2020-07-01), AMSTERDAM, NL , pages 136211, XP093045163, ISSN: 0013-4686, DOI: 10.1016/j.electacta.2020.136211

## Description

### TECHNICAL FIELD

The present invention relates to a silicon-based negative electrode active material including a core containing silicon particles and cetyltrimethylammonium disposed on a surface of the silicon particles; and MXene disposed on the core and including a hydroxyl group on a surface thereof, a method of preparing the silicon-based negative electrode active material, a negative electrode including the silicon-based negative electrode active material, and a secondary battery including the negative electrode.

### BACKGROUND ART

In recent years, there has been a dramatic increase in demand for batteries as energy sources with the technical development and increase in demand for mobile devices, and research on batteries capable of meeting various requirements has been conducted accordingly. In particular, research on a lithium secondary battery having a high energy density and also exhibiting excellent lifespan and cycle characteristics as a power source for such devices has been actively conducted.

A lithium secondary battery refers to a battery in which a non-aqueous electrolyte containing lithium ions is included in an electrode assembly that includes a positive electrode including a positive electrode active material enabling intercalation/deintercalation of lithium ions, a negative electrode including a negative electrode active material enabling intercalation/deintercalation of lithium ions, and a microporous separator interposed between the positive electrode and the negative electrode.

Silicon particles may be used as the negative electrode active material. However, electrical conductivity of the silicon particles is fairly low to require a large amount of a conductive material in the negative electrode, and accordingly, an amount of the negative electrode active material is relatively reduced to lower energy density of the negative electrode.

To overcome the obstacle, a technique for forming a carbon coating layer on a surface of the silicon particles is used. To be specific, amorphous carbon may be disposed as the carbon coating layer, or graphene may be used. However, in the process of disposing the graphene on the surface of the silicon particles, defects are easily caused in the graphene to reduce electrical conductivity accordingly. Therefore, research on a method of using a different coating material or improving bonding force between the silicon particles and the coating material has been underway for more effective improvement in conductivity.

In particular, a technique of including a polymer binder in the coating material is used on occasion to increase the bonding force between a material to be coated and the silicon particles, but the technique also reduces conductivity in part by the polymer binder.

Li et al. (ACS Applied Materials & Interfaces 2020, 12, 48718-48728) describes three-dimensinal hierarchical porous structures constructed by two-stage MXene-wrapped Si nanoparticles.

### DISCLOSURE OF THE INVENTION

### TECHNICAL PROBLEM

An aspect of the present invention provides a silicon-based negative electrode active material capable of improving rate characteristics and lifespan characteristics of batteries.

Another aspect of the present invention provides a method of preparing the silicon-based negative electrode active material.

Another aspect of the present invention provides a negative electrode including the silicon-based negative electrode active material.

Another aspect of the present invention provides a secondary battery including the negative electrode.

### TECHNICAL SOLUTION

According to an aspect of the present invention, there is provided a silicon-based negative electrode active material including a core containing silicon particles and cetyltrimethylammonium disposed on a surface of the silicon particles, and MXene disposed on the core and including a hydroxyl group on a surface thereof,
wherein the MXene comprising a hydroxyl group on the surface thereof comprises the hydroxyl group in an amount of 1 wt% to 10 wt%.

According to an aspect of the present invention, there is provided a method of preparing a silicon-based negative electrode active material, the method including mixing silicon particles and cetyltrimethylammonium bromide and disposing cetyltrimethylammonium on the silicon particles to form a core, and mixing the core and MXene including a hydroxyl group on a surface thereof to dispose the MXene including a hydroxyl group on the surface thereof on the core,
wherein the MXene comprising a hydroxyl group on the surface thereof comprises the hydroxyl group in an amount of 1 wt% to 10 wt%.

According to another aspect of the present invention, there is provided a negative electrode including the silicon-based negative electrode active material.

According to another aspect of the present invention, there is provided a secondary battery including the negative electrode.

### ADVANTAGEOUS EFFECTS

In a silicon-based negative electrode active material according to the present invention, MXene including a hydroxyl group on a surface thereof may be effectively applied onto silicon particles through cetyltrimethylammonium. To be specific, a surface of a core including the silicon-based particles and the cetyltrimethylammonium may carry positive charges by positive charges of the cetyltrimethylammonium, and the MXene may be stably applied onto the surface of the core by the positive charges and negative charges of the MXene including a hydroxyl group on the surface thereof. Accordingly, electrical conductivity of the silicon-based negative electrode active material may be increased to improve rate characteristics and lifespan characteristics of batteries. In addition, the MXene and the silicon particles may remain in a state of being strongly bonded through the cetyltrimethylammonium, even with a large volume change of the silicon-based negative electrode active material upon battery operation. Accordingly, the lifespan characteristics of batteries may be further improved.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

As used herein, a "specific surface area" is measured through a BET method, and specifically may be calculated from an amount of nitrogen gas adsorbed at a liquid nitrogen temperature (77K) using BELSORP-mini II from BEL JAPAN, INC.

The term "average particle diameter (D₅₀)" as used herein may be defined as a particle diameter at a cumulative volume of 50% in a particle size distribution curve of particles. The average particle diameter (D₅₀), for example, may be measured by using a laser diffraction method. The laser diffraction method may generally measure a particle diameter ranging from a submicron level to a few mm and may obtain highly repeatable and high-resolution results.

Hereinafter, the present invention will be described in detail.

### Silicon-based negative electrode active material

A silicon-based negative electrode active material according to an embodiment of the present invention may include a core containing silicon particles and cetyltrimethylammonium disposed on a surface of the silicon particles, and MXene disposed on the core and including a hydroxyl group on a surface thereof, wherein the MXene comprising a hydroxyl group on the surface thereof comprises the hydroxyl group in an amount of 1 wt% to 10 wt%.

The core may include silicon particles and cetyltrimethylammonium.

The silicon particles may be a type of pure silicon that has not been subjected to a deliberate oxidation process. That is, although some oxygen atoms or functional groups including oxygen may be contained on a surface through natural oxidation, but the amount is different from SiOx (0<X≤2) formed through the deliberate oxidation process. Using the silicon particles, a negative electrode may have improved capacity.

More specifically, the silicon particles may include a hydroxyl group inevitably generated through natural oxidation. The hydroxyl group is disposed on the silicon particles. The hydroxyl group may be in an amount of 0.1 wt% to 2 wt% with respect to a total weight of the silicon particles.

The silicon particles may have an average particle diameter (D₅₀) of 0.3 µm to 100 µm. When the above range is satisfied, breakage of the silicon particles due to a volume change of the silicon particles upon battery operation may be minimized, and side reactions between an electrolyte and the silicon particles may be suppressed to improve battery life.

To be specific, the silicon particles may have an average particle diameter (D₅₀) of 2 µm to 7 µm. When the above range is satisfied, MXene having a hydroxyl group on a surface thereof, which has sufficient electrical conductivity, may entirely cover the silicon particles and be uniformly disposed. Accordingly, the electrical conductivity of the silicon-based negative electrode active material may become stable and greatly improved, and rate characteristics and lifespan characteristics of batteries may thus be improved.

The silicon particles may have a specific surface area of 10 m²/g to about 200 m²/g. When the above range is satisfied, side reactions between the negative electrode active material and an electrolyte may be suppressed.

Specifically, the silicon particles may have a specific surface area of 10 m²/g to about 20 m²/g. When the above range is satisfied, a sufficient amount of cetyltrimethylammonium may be strongly bonded to a surface of the silicon particles, and the rate characteristics and lifespan characteristics of batteries may thus be significantly improved.

The cetyltrimethylammonium may be disposed on the silicon particles. The cetyltrimethylammonium corresponds to Formula 1 below and may carry positive charges.

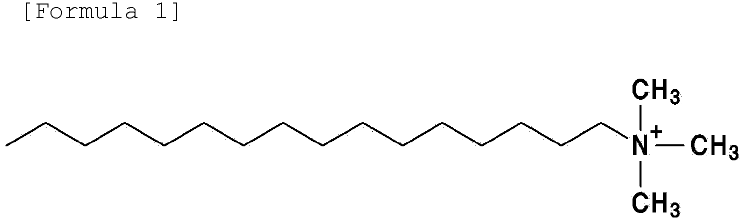

In general, silicon particles contain a certain amount of hydroxyl groups on a surface through natural oxidation, and thus the surface of the silicon particles carries negative charges. When trying to apply MXene carrying the same negative charges on the surface of the silicon particles, the MXene is not applied well on the silicon particle due to the same negative charges carried by the silicon particles and the MXene, and even if it is applied, structural stability is very low. Accordingly, lifespan characteristics of manufactured batteries are deteriorated.

The cetyltrimethylammonium removes this obstacle. Specifically, when the cetyltrimethylammonium is disposed on the surface of the silicon particles, a surface of a core including the silicon particles carries positive charges, and thus the MXene carrying negative charges on the surface may be applied well on the core. Accordingly, the structural stability of the silicon-based negative electrode active material may be improved, and the lifespan characteristics of batteries may be improved. In addition, the MXene and the silicon particles may remain in a state of being strongly bonded through the cetyltrimethylammonium, even with a large volume change of the silicon-based negative electrode active material upon battery operation. Accordingly, the lifespan characteristics of batteries may be further improved.

In addition, a length of an alkyl chain of cetyltrimethylammonium is at a fair level, and thus the distance between the silicon particles and the MXene may not be too far apart, and the surface of the core may easily carry positive charges. In addition, aggregation of the negative electrode active materials in the process of preparing the negative electrode active material may be effectively prevented.

In particular, the MXene contains atoms such as Ti in addition to carbon, and the atoms are preferably not subjected to oxidization to improve electrical conductivity of a negative electrode active material. However, there remains an issue that the atoms of the MXene are easily oxidized in an environment having a high pH. Therefore, in the process of applying the MXene onto the core, the pH of a solution containing the core onto which the MXene is applied is preferably regulated to a low level. When the core includes cetyltrimethylammonium, the pH of the solution may be at a low level, and thus oxidation of the atoms of MXene may be minimized, and improving electrical conductivity of a negative electrode active material may be much easier.

In addition, cetyltrimethylammonium has low toxicity unlike other surfactants (e.g., methylammonium hydroxide), and thus is a desirable material for safety and environmental protection.

In the core, a weight ratio of the silicon particles to the cetyltrimethylammonium may be 10:1 to 10,000:1, specifically 80:1 to 1,000:1, and more specifically 100:1 to 500:1. When the above range is satisfied, the silicon particles and the MXene may be effectively bonded, and the electrical conductivity of silicon-based negative electrode active material to be prepared may be effectively improved.

MXene including a hydroxyl group on the surface thereof may be disposed on the core. The MXene (or also referred to as MXene) indicates a compound having a two-dimensional planar structure where a transition metal is bonded to at least any one of carbon and nitrogen.

The MXene may include at least any one selected from the group consisting of M₃X₂, M₄X₃, M₂X, and M₄X₄. Among the above, M₃X₂ is most preferable for stability of maintaining the structure and performance of the silicon-based negative electrode active material. M above may be a transition metal, and specifically, may be at least any one selected from the group consisting of Ti, V, Nb, Mo, and Zr. X above may be at least any one of carbon and nitrogen.

The MXene may be at least any one selected from the group consisting of Ti₃C₂, Ti₄C₃, Ti₂C, Ti₄N₃, Ti₃CN, V₂C, V₄C₃, Nb₂C, Nb₄C₃, Mo₂C, (Mo,V)₄C₃, and Zr₃C₂. Specifically, the MXene may be at least any one selected from the group consisting of Ti₃C₂, Ti₄C₃, Ti₂C, Ti₄N₃, and Ti₃CN, and in this case, electrical conductivity of the silicon-based negative electrode active material may be further improved. More specifically, the MXene may be Ti₃C₂, and in this case, the stability of maintaining the structure and performance of the silicon-based negative electrode active material may be further improved.

Specifically, the MXene is a two-dimensional material obtained from MAX having a three-dimensional crystal structure formed of an M layer, an A layer, and an X layer, where M is the transition metal, A is a Group 13 element or a Group 14 element, and X may be at least any one of carbon and nitrogen. The MXene is obtained by peeling the MAX through a strong acid, and the like, and in this peeling process, the MXene may include a hydroxyl group on a surface thereof. Therefore, the MXene described above may also include a hydroxyl group on the surface thereof, and this is referred to as "MXene including a hydroxyl group on a surface thereof" as used herein.

The MXene including a hydroxyl group on the surface thereof has high electrical conductivity, and may thus improve the electrical conductivity of the silicon-based negative electrode active material to improve lifespan characteristics of a negative electrode.

The MXene including a hydroxyl group on the surface thereof includes the hydroxyl group in an amount of 1 wt% to 10 wt%, specifically 1 wt% to 2 wt%. When the above range is satisfied, the extent of oxidation of the MXene may be reduced to further improve the electrical conductivity of the silicon-based negative electrode active material through the MXene.

The MXene including a hydroxyl group on the surface thereof may have an average size of 0.1 µm to 50 µm, specifically 0.5 µm to 20 µm, and more specifically 1 µm to 10 µm. When the above range is satisfied, the MXene having a hydroxyl group on the surface thereof may effectively cover the surface of the core to further improve the electrical conductivity of the silicon-based negative electrode active material. The size of the MXene means a greatest length that two points may have when any two points are indicated within the MXene, and the average size means an average of the sizes of the top 10 MXenes having a larger size and the bottom 10 MXenes having a smaller size (selected from a total of 50 MXenes) among the MXenes included in the silicon-based negative electrode active material. The greatest length may be measured through atomic force microscopy (AFM) by dropping a solution containing MXene on a silicon wafer and drying.

The silicon-based negative electrode active material may include the MXene including a hydroxyl group on the surface thereof in an amount of 0.5 wt% to 50 wt%, specifically 1 wt% to 30 wt%, and more specifically 3 wt% to 6 wt%. When the above range is satisfied, a decrease in an initial discharge capacity of the silicon-based negative electrode active material may be minimized, and cycle characteristics of the negative electrode may be improved.

The MXene including a hydroxyl group on the surface thereof carries negative charges and the cetyltrimethylammonium carries positive charges, and the MXene including a hydroxyl group on the surface thereof may thus be bonded to the cetyltrimethylammonium through electrostatic attraction. It may also be seen that the core coated with the cetyltrimethylammonium and carrying positive charges is bonded to the MXene including a hydroxyl group on the surface thereof through electrostatic attraction.

In the silicon-based negative electrode active material, as determined through elemental content analysis (SEM EDS), nitrogen atoms may be in an amount 0.001 atom% to 1 atom%, specifically 0.005 atom% to 0.01 atom% on the surface of the silicon-based negative electrode active material. When the above range is satisfied, a fair amount of cetyltrimethylammonium is present between the silicon particles and the MXene having a hydroxyl group on the surface thereof to improve bonding strength between the silicon particles and the MXene including a hydroxyl group on the surface thereof and minimize a decrease in electrical conductivity on the surface of the silicon particles. In the element content analysis, atom% may be determined by detecting X-rays of nitrogen characteristics. In this case, the instrument used was Hitachi's S-4800, and an area at 3000x magnification was measured for 1.5 minutes using an acceleration voltage of 20 kV.

When the MXene is at least any one selected from the group consisting of Ti₃C₂, Ti₄C₃, Ti₂C, Ti₄N₃, and Ti₃CN, upon conducting the element content analysis (SEM EDS) on the silicon-based negative electrode active material, Ti atoms were in an amount of 5 atom% or more, specifically 5 atom% to 30 atom%, and more specifically 10 atom% to 15 atom% on the surface of the silicon-based negative electrode active material. When the above range is satisfied, it indicates that the MXene is effectively applied onto the core, and the electrical conductivity of the silicon-based negative electrode active material may thus be more effectively improved. In the element content analysis, atom% may be determined by detecting X-rays of Ti characteristics. In this case, the instrument used was Hitachi's S-4800, and an area at 3000x magnification was measured for 1.5 minutes using an acceleration voltage of 20 kV.

### Method of preparing silicon-based negative electrode active material

A method of preparing a silicon-based negative electrode active material according to another embodiment of the present invention may include mixing silicon particles and cetyltrimethylammonium bromide and disposing cetyltrimethylammonium on the silicon particles to form a core, and mixing the core and MXene including a hydroxyl group on a surface thereof to dispose the MXene including a hydroxyl group on the surface thereof on the core. In this case, the silicon particles, the cetyltrimethylammonium, and the MXene including a hydroxyl group on the surface thereof are the same as the silicon particle, the cetyltrimethylammonium, and the MXene including the hydroxyl group on the surface described above, and thus descriptions thereof will be omitted.

In the forming of the core, the silicon particles and the cetyltrimethylammonium bromide may be added to a solvent and stirred. The solvent may be water (distilled water). Specifically, cetyltrimethylammonium bromide in a solid state may be dispersed in distilled water, and silicon particle powder may be additionally dispersed in the distilled water and stirred to mix the silicon particles and the cetyltrimethylammonium bromide. The stirring may be performed using a magnetic stirrer. The stirring may be performed at room temperature for 20 minutes to 1 hour, and then the solvent except for the solid mixture (solid content) is removed. Thereafter, the mixture is washed with distilled water through a centrifugal separator to remove unreacted cetyltrimethylammonium bromide and residual bromine ions.

The disposing of MXene including a hydroxyl group on the surface thereof may include dispersing the core in distilled water to form an aqueous solution of the core, and then adding an aqueous solution including the MXene containing a hydroxyl group on the surface thereof to the aqueous solution of the core, and stirring the mixture to form a mixed solution in which the core and the MXene containing a hydroxyl group on the surface thereof are mixed Specifically, the stirring may be performed for 40 minutes to 80 minutes at room temperature.

Thereafter, the mixed solution may be washed with distilled water using a centrifugal separator to remove unreacted MXene including a hydroxyl group on the surface thereof. Then, the solvent except for the solid mixture (solid content) may be removed, and the mixture may be dried (1.5 hours to 4.5 hours) in an oven at 40 °C to 80 °C. Using the way described above, the silicon-based negative electrode active material of an embodiment described above may be obtained.

### Negative electrode

A negative electrode according to another embodiment of the present invention may include the silicon-based negative electrode active material of an embodiment described above. Specifically, the negative electrode may include a negative electrode active material layer, and the negative electrode active material layer may include the silicon-based negative electrode active material of an embodiment described above.

The negative electrode may be a free-standing negative electrode, in which case the negative electrode active material layer itself corresponds to a negative electrode. Alternatively, the negative electrode may include a negative electrode current collector supporting the negative electrode active material layer.

The negative electrode current collector is not particularly limited as long as it has conductivity without causing chemical changes in batteries. For example, copper, stainless steel, aluminum, nickel, titanium, fired carbon, or aluminum or stainless steel that is surface-treated with one of carbon, nickel, titanium, silver, or the like may be used as the negative electrode current collector. Specifically, a transition metal which well adsorbs carbon such as copper and nickel may be used as the negative electrode current collector.

The negative electrode active material layer may be disposed on one surface or both surfaces of the negative electrode current collector. Also, for the free-standing negative electrode, the negative electrode active material layer itself may be a negative electrode without a negative electrode current collector.

The negative electrode active material layer may include a silicon-based negative electrode active material, and the silicon-based negative electrode active material may be the silicon-based negative electrode active material of an embodiment described above.

The negative electrode active material layer may further include a carbon-based negative electrode active material. The carbon-based negative electrode active material may be at least any one selected from the group consisting of artificial graphite, natural graphite, and graphitized mesocarbon microbead.

The negative electrode active material layer may further include a binder. The binder serves to secure adhesion between silicon-based negative electrode active materials or between a silicon-based negative electrode active material and a collector, and binders generally used in the art may be used, and the type thereof is not particularly limited. The binder may be, for example, vinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, carboxymethyl cellulose (CMC), styrene-butadiene rubber (SBR), fluorine rubber, or various copolymers thereof, and any one thereof or a mixture of two or more thereof may be used. Particularly, when an aqueous dispersion process is used, the binder is preferably an aqueous binder such as SBR and CMC.

The negative electrode active material layer may further include a conductive material. The conductive material may be at least one selected from the group consisting of fullerene, carbon black, carbon nanotubes, graphene, plate-type graphite, and the like.

### Lithium secondary battery

Next, a secondary battery according to another embodiment of the present invention will be described.

The secondary battery according to another embodiment of the present invention may include the negative electrode of an embodiment described above. The secondary battery may be a lithium ion secondary battery.

Specifically, the secondary battery may include the negative electrode, a positive electrode, a separator interposed between the positive electrode and the negative electrode, and an electrolyte, and the negative electrode is the same as the negative electrode of an embodiment described above. Since the negative electrode has been described above, a detailed description thereof will be omitted.

The positive electrode may include a positive electrode current collector, and a positive electrode active material layer formed on the positive electrode current collector and including the positive electrode active material.

In the positive electrode, the positive electrode current collector is not particularly limited as long as it has conductivity without causing chemical changes in batteries. For example, stainless steel, aluminum, nickel, titanium, fired carbon, or aluminum or stainless steel that is surface-treated with one of carbon, nickel, titanium, silver, and the like may be used. In addition, the positive electrode current collector may typically have a thickness of 3 µm to 500 µm, and fine irregularities may be formed on a surface of the current collector to improve the adhesion of the positive electrode active material. For example, the positive electrode current collector may be used in various forms such as a film, a sheet, a foil, a net, a porous body, a foam body, and a non-woven fabric body.

The positive electrode active material may be a positive electrode active material commonly used in the art. Specifically, the positive electrode active material may be a layered compound such as a lithium cobalt oxide (LiCoO₂) and a lithium nickel oxide (LiNiO₂), or a compound substituted by one or more transition metals; a lithium iron oxide such as LiFe₃O₄; a lithium manganese oxide represented by Formula Li_{1+c1}Mn_{2-c1}O₄ (0≤c1≤0.33), LiMnO₃, LiMn₂O₃, or LiMnO₂; a lithium copper oxide (Li₂CuO₂); a vanadium oxide such as LiV₃O₈, V₂O₅, and Cu₂V₂O₇; a Ni-site type lithium nickel oxide represented by Formula LiNi_{1-c2}M_{c2}O₂ (where M is at least one selected from the group consisting of Co, Mn, Al, Cu, Fe, Mg, B, and Ga, and 0.01≤c2≤0.3 is satisfied); a lithium manganese complex oxide represented by Formula LiMn_{2-c3}M_{c3}O₂ (where M is at least one selected from the group consisting of Co, Ni, Fe, Cr, Zn, and Ta, and 0.01≤c3≤0.1 is satisfied) or Formula Li₂Mn₃MO₈ (where M is at least one selected from the group consisting of Fe, Co, Ni, Cu, and Zn); LiMn₂O₄ in which a portion of Li in Formula is substituted with an alkaline earth metal ion, and the like, but is not limited thereto. The positive electrode may be a Li-metal.

The positive electrode active material layer may include a positive electrode conductive material and a positive electrode binder, together with the positive electrode active material described above.

the positive electrode conductive material is used to impart conductivity to an electrode, and any positive electrode conductive material may be used without particular limitation as long as it has electronic conductivity without causing chemical changes in batteries to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, or various copolymers thereof, and any one thereof or a mixture of two or more thereof may be used.

The separator is to separate the negative electrode and the positive electrode and to provide a movement path for lithium ions. Any separator may be used without particular limitation as long as it is a separator commonly used in a secondary battery. Particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may be selectively used in a single-layered or a multi-layered structure.

The electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include a non-aqueous organic solvent and a lithium salt.

As the non-aqueous organic solvent, for example, an aprotic organic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

Particularly, among the carbonate-based organic solvents, a cyclic carbonate such as ethylene carbonate and propylene carbonate may preferably be used since it is an organic solvent of high viscosity and has high dielectric constant to dissociate a lithium salt well. When such a cyclic carbonate is mixed with a linear carbonate of low viscosity and low dielectric constant such as dimethyl carbonate and diethyl carbonate in an appropriate ratio, it is able to prepare an electrolyte having a high electric conductivity, therefore such a combined use is more preferable.

As the metal salt, a lithium salt may be used. The lithium salt is a material which is easily dissolved in the non-aqueous electrolyte solution. For example, as an anion of the lithium salt, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used.

In the electrolyte, in order to improve the lifespan properties of a battery, to suppress the decrease in battery capacity, and to improve the discharge capacity of the battery, one or more additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included other than the above electrolyte components.

According to yet another embodiment of the present invention, a battery module including the secondary battery as a unit cell, and a battery pack including the same are provided. The battery module and the battery pack include the secondary battery which has high capacity, high rate characteristics, and cycle characteristics, and thus, may be used as a power source of a medium- and-large sized device selected from the group consisting of an electric car, a hybrid electric vehicle, a plug-in hybrid electric vehicle, and a power storage system.

Hereinafter, the present invention will be described in more detail with reference to specific embodiments.

### Examples and Comparative Examples

### Example 1: Preparation of silicon-based negative electrode active material and negative electrode

### (1) Preparation of silicon-based negative electrode active material

200 g of a solution (solvent: distilled water) including 20 g of silicon particles having an average particle diameter (D₅₀) of 5 µm and a specific surface area of 10 m²/g and 5 wt% of cetyltrimethylammonium bromide was prepared and stirred under the conditions of room temperature (25 °C), 30 minutes, and 200 rpm through Magnetic Stirrer. Thereafter, the solution was washed with distilled water using a centrifugal separator to remove 'cetyltrimethylammonium bromide that was not bonded to the silicon particles' present on a surface of the silicon particles, so that a core comprising silicon particles and cetyltrimethylammonium disposed on a surface of the silicon particles was prepared.

Meanwhile, MXene (Ti₃C₂) having an average size of 7 µm and having a hydroxyl group on a surface thereof (1 wt% of a hydroxyl group with respect to a total MXene including a hydroxyl group on the surface thereof) was dispersed in distilled water to prepare a MXene aqueous solution. 20.2 g of the core and 60 g of 5 wt% of a MXene aqueous solution including 3 g of MXene containing a hydroxyl group on the surface were mixed, and then stirred under the conditions of room temperature (25 °C), 60 minutes, and 200 rpm through Magnetic Stirrer. The solution measured after the stirring had a pH of 8.1. Thereafter, using a centrifugal separator, the solution was washed with distilled water to remove the 'MXene that was not bonded to the silicon particles' from the surface of the silicon particles, and then subjected to a drying process. Using the way described above, a silicon-based negative electrode active material was prepared.

A weight ratio of silicon particles to cetyltrimethylammonium in the core was 100:1. The silicon-based negative electrode active material included MXene having a hydroxyl group on the surface thereof in an amount of 4 wt%.

### (2) Preparation of negative electrode

The prepared silicon-based negative electrode active material, carbon black as a conductive material, carboxymethylcellulose (CMC) as a binder, and styrene butadiene rubber (SBR) were mixed in a weight ratio of 95.8:1:1.7:1.5 to prepare a mixture. Thereafter, 7.8 g of distilled water was added to 5 g of the mixture and stirred to prepare a negative electrode slurry. The negative electrode slurry was applied onto a copper (Cu) metal thin film, which is a negative electrode current collector, having a thickness of 20 µm, and then dried. In this case, the temperature of circulated air was 60 °C. Thereafter, the resulting product was roll-pressed and then dried in a vacuum oven of 130 °C for 12 hours to prepare a negative electrode.

### Example 2: Preparation of silicon-based negative electrode active material and negative electrode

A silicon-based negative electrode active material and a negative electrode were prepared in the same manner as in Example 1, except that the weight ratio of silicon particles and cetyltrimethylammonium in the core was 10:1, and MXene including a hydroxyl group on the surface thereof was included in an amount of 5.5 wt% in the silicon-based negative electrode active material.

### Example 3: Preparation of silicon-based negative electrode active material and negative electrode

A silicon-based negative electrode active material and a negative electrode were prepared in the same manner as in Example 1, except that Ti₄C₃ was used instead of Ti₃C₂ as the MXene having a hydroxyl group on the surface thereof. A weight ratio of silicon particles to cetyltrimethylammonium in the core was 100:1. The silicon-based negative electrode active material included MXene having a hydroxyl group on the surface thereof in an amount of 4.5 wt%.

### Comparative Example 1: Preparation of silicon-based negative electrode active material and negative electrode

### (1) Preparation of silicon-based negative electrode active material

MXene (Ti₃C₂) having an average size of 7 µm and having a hydroxyl group on a surface thereof (1 wt% of a hydroxyl group with respect to a total MXene including a hydroxyl group on the surface thereof) was dispersed in distilled water to prepare a MXene aqueous solution (5 wt% of MXene aqueous solution containing 3 g of MXene containing a hydroxyl group on the surface thereof). 20 g of silicon particles having an average particle diameter (D₅₀) of 5 µm and a specific surface area of 10 m²/g and 60 g of MXene aqueous solution containing a hydroxyl group on the surface thereof were mixed and then stirred under the conditions of room temperature (25 °C), 60 minutes, and 200 rpm through Magnetic Stirrer. Thereafter, using a centrifugal separator, the solution was washed with distilled water to remove the 'MXene that was not bonded to the silicon particles' from the surface of the silicon particles, and then subjected to a drying process. Using the way described above, a silicon-based negative electrode active material was prepared.

The MXene having a hydroxyl group on the surface thereof was included in an amount of 0.01 wt% in the silicon-based negative electrode active material.

### (2) Preparation of negative electrode

The prepared silicon-based negative electrode active material, carbon black as a conductive material, carboxymethylcellulose (CMC) as a binder, and styrene butadiene rubber (SBR) were mixed in a weight ratio of 95.8:1:1.7:1.5 to prepare a mixture. Thereafter, 7.8 g of distilled water was added to 5 g of the mixture and stirred to prepare a negative electrode slurry. The negative electrode slurry was applied onto a copper (Cu) metal thin film, which is a negative electrode current collector, having a thickness of 20 µm, and then dried. In this case, the temperature of circulated air was 60 °C. Thereafter, the resulting product was roll-pressed and then dried in a vacuum oven of 130 °C for 12 hours to prepare a negative electrode.

### Comparative Example 2: Preparation of silicon-based negative electrode active material and negative electrode

A silicon-based negative electrode active material and a negative electrode were prepared in the same manner as in Example 1, except that sodium dodecyl sulfate (SDS) was used instead of the cetyltrimethylammonium bromide. The silicon-based negative electrode active material included MXene having a hydroxyl group on the surface thereof in an amount of 0.02 wt%.

### Comparative Example 3: Preparation of silicon-based negative electrode active material and negative electrode

A silicon-based negative electrode active material and a negative electrode were prepared in the same manner as in Example 1, except that graphene oxide was used instead of the MXene having a hydroxyl group on the surface thereof. The graphene oxide had an average size of 5 µm. The graphene was included in an amount of 5 wt% in the silicon-based negative electrode active material.

### Comparative Example 4: Preparation of silicon-based negative electrode active material and negative electrode

A silicon-based negative electrode active material and a negative electrode were prepared in the same manner as in Example 1, except that lauryl methyl gluceth-10 hydroxypropyldimonium chloride was used instead of the cetyltrimethylammonium bromide. The MXene having a hydroxyl group on the surface thereof was included in an amount of 0.3 wt% in the silicon-based negative electrode active material.

### Comparative Example 5: Preparation of silicon-based negative electrode active material and negative electrode

A silicon-based negative electrode active material and a negative electrode were prepared in the same manner as in Example 1, except that methyl ammonium hydroxide was used instead of the cetyltrimethylammonium bromide. The MXene having a hydroxyl group on the surface thereof was included in an amount of 1 wt% in the silicon-based negative electrode active material.

### Comparative Example 6: Preparation of silicon-based negative electrode active material and negative electrode

A silicon-based negative electrode active material and a negative electrode were prepared in the same manner as in Example 1, except that poly diallyl dimethyl ammonium chloride was used instead of the cetyltrimethylammonium bromide. The MXene having a hydroxyl group on the surface thereof was included in an amount of 0.5 wt% in the silicon-based negative electrode active material.

### Experimental Example

### Experimental Example 1: Evaluation of coating properties

For the silicon-based negative electrode active materials used in Examples and Comparative Examples, EDS (energy dispersive spectroscopy) was used to evaluate the amount of Ti element on a surface of the silicon-based negative electrode active materials and the results are shown in Table 1. The instrument used was Hitachi's S-4800, and an area at 3000x magnification was measured for 1.5 minutes using an acceleration voltage of 20 kV. The coating property was indirectly evaluated by determining the Atom% of Ti among all the elements measured through the EDS analysis.

### Experimental Example 2: C-rate evaluation

Using the negative electrode of Examples and Comparative Examples, batteries were each manufactured as follows.

Li[Ni_{0.6}Mn_{0.2}Co_{0.2}]O₂ was used as a positive electrode active material. The positive electrode active material, carbon black as a conductive material, and polyvinylidene fluoride (PVdF) as a binder were mixed in a solvent N-methyl-2 pyrrolidone in a weight ratio of 94:4:2 to prepare a positive electrode slurry.

The prepared positive electrode slurry was applied onto an aluminum metal thin film as a positive electrode current collector having a thickness of 15 µm and dried. In this case, the temperature of circulated air was 110 °C. Thereafter, the resulting product was roll-pressed and then dried in a vacuum oven of 130 °C for 2 hours to form a positive electrode active material layer, so that positive electrode was prepared.

Each of the negative electrodes of Examples and Comparative Examples, the prepared positive electrode, and a porous polyethylene separator were assembled using a stacking method, and an electrolyte (ethylene carbonate (EC)/ethyl methyl carbonate (EMC) = 1/2 (volume ratio), lithium hexafluorophosphate (1 mole of LiPF₆) was injected into the assembled battery to prepare a lithium ion secondary battery.

The prepared lithium ion secondary battery was charged at a 0.5C-rate (charging at a constant current of 0.5 C, charging at a constant voltage of 0.05 V, and 0.05 C cut off), and discharged at a specific C-rate (0.5C, 1C, 2C, 5C) (constant current discharging at the corresponding C-rate, 1.5 V cut off) to measure discharge capacity according to each rate condition. The discharge capacity was calculated with respect to the weight of a negative electrode active material, and capacity expression rate was calculated according to Equation below.Capacity expression rate (%) = {discharge capacity at the corresponding C-rate / discharge capacity at 0.5 C}×100

The results thereof are presented in Table 1 below.

### Experimental Example 3: Evaluation of capacity retention

The lithium ion secondary battery prepared in Experimental Example 1 was charged and discharged under the following conditions.

Charging conditions: Charging at a constant current of 0.5C up to 4.25 V, then charging at 4.2 V until a current rate of 0.1 C flows.

Discharging conditions: Discharging at a current rate of 0.5 C up to 2.8 V.

When the charging and discharging were set as one cycle, 100 cycles were performed at 25 °C. Thereafter, the discharge capacity (capacity retention) after 100 cycles was evaluated with respect to 100% of the discharge capacity after 1^{st} cycle, and the results are shown in Table 1.

Meanwhile, when the charge capacity of 1^{st} cycle is 100%, the ratio of the discharge capacity of 1^{st} cycle was measured as an initial efficiency (%).

**[Table 1]**

| | pH of solut ion | Ti atom% | 0.5 C disch arge capac ity (mAh/ g) | 1 C capac ity expre ssion rate (%) | 2 C capac ity expre ssion rate (%) | 5 C capac ity expre ssion rate (%) | Capac ity reten tion rate (%) |
|---|---|---|---|---|---|---|---|
| Example 1 | 8.1 | 13 | 3, 300 | 90 | 84 | 76 | 93 |
| Example 2 | 9.2 | 15 | 2,900 | 85 | 70 | 59 | 87 |
| Example 3 | 8.5 | 11 | 2, 800 | 87 | 79 | 72 | 85 |
| Comparative Example 1 | 7.9 | 0.05 | 3,400 | 83 | 65 | 52 | 65 |
| Comparative Example 2 | 6.2 | 0.03 | 3, 380 | 82 | 67 | 51 | 65 |
| Comparative Example 3 | 6.5 | - | 2,750 | 78 | 63 | 48 | 60 |
| Comparative Example 4 | 8.3 | 0.1 | 2, 300 | 76 | 68 | 55 | 73 |
| Comparative Example 5 | 10.9 | 0.8 | 2,780 | 82 | 66 | 43 | 72 |
| Comparative Example 6 | 8.8 | 0.2 | 2, 960 | 81 | 63 | 51 | 65 |

The 'solution' in Table 1 refers to an aqueous solution including a MXene-coated core (or silicon particles), and specifically refers to an aqueous solution including the prepared silicon-based negative electrode active material. Referring to Table 1, for Examples, the solution has a low pH in the preparation process of the silicon-based negative electrode active material, and accordingly oxidation of Ti atoms in the MXene may be suppressed. In addition, for the silicon-based negative electrode active material including cetyltrimethylammonium and MXene, it was determined through Ti atom% that MXene was effectively applied. Accordingly, it is seen that the oxidation of the silicon-based negative electrode active material is suppressed to improve electrical conductivity, and the discharge capacity, C-rate, and capacity retention of Examples are excellent.

## Claims

1. A silicon-based negative electrode active material comprising:
a core comprising silicon particles and cetyltrimethylammonium disposed on a surface of the silicon particles; and
MXene disposed on the core and comprising a hydroxyl group on a surface thereof,
wherein the MXene comprising a hydroxyl group on the surface thereof comprises the hydroxyl group in an amount of 1 wt% to 10 wt%.

2. The silicon-based negative electrode active material of claim 1, wherein the silicon particles have an average particle diameter (D₅₀) of 0.3 µm to 100 µm.

3. The silicon-based negative electrode active material of claim 1, wherein in the core, a weight ratio of the silicon particles to the cetyltrimethylammonium is 10:1 to 10,000:1.

4. The silicon-based negative electrode active material of claim 1, wherein the MXene is at least any one selected from the group consisting of M₃X₂, M₄X₃, M₂X, and M₄X₄, where M is a transition metal and X is at least one of carbon and nitrogen.

5. The silicon-based negative electrode active material of claim 4, wherein the MXene is at least any one selected from the group consisting of Ti₃C₂, Ti₄C₃, Ti₂C, Ti₄N₃, and Ti₃CN.

6. The silicon-based negative electrode active material of claim 5, wherein the MXene is Ti₃C₂.

7. The silicon-based negative electrode active material of claim 1, wherein the MXene comprising a hydroxyl group on the surface thereof has an average size of 0.1 µm to 50 µm.

8. The silicon-based negative electrode active material of claim 1, wherein the silicon-based negative electrode active material comprises the MXene comprising a hydroxyl group on the surface thereof in an amount of 0.5 wt% to 50 wt%.

9. The silicon-based negative electrode active material of claim 5, wherein in SEM EDS analysis of the silicon-based negative electrode active material, Ti atoms on a surface of the silicon-based negative electrode active material is in an amount of 5 atom% or greater.

10. A method of preparing a silicon-based negative electrode active material, the method comprising:
mixing silicon particles and cetyltrimethylammonium bromide and disposing cetyltrimethylammonium on the silicon particles to form a core; and
mixing the core and MXene comprising a hydroxyl group on a surface thereof to dispose the MXene on the core,
wherein the MXene comprising a hydroxyl group on the surface thereof comprises the hydroxyl group in an amount of 1 wt% to 10 wt%.

11. A negative electrode comprising the silicon-based negative electrode active material of claim 1.

12. A secondary battery comprising the negative electrode of claim 11.

## Patentansprüche

1. Negativelektrodenaktivmaterial auf Siliziumbasis umfassend:
einen Kern, der Siliziumteilchen und Cetyltrimethylammonium, das auf einer Oberfläche der Siliziumteilchen angeordnet ist, umfasst; und
MXene, das auf dem Kern angeordnet ist und eine Hydroxylgruppe auf einer Oberfläche davon umfasst,
wobei das MXene, das eine Hydroxylgruppe auf der Oberfläche davon umfasst, die Hydroxylgruppe in einer Menge von 1 Gew.-% bis 10 Gew.-% umfasst.

2. Negativelektrodenaktivmaterial auf Siliziumbasis nach Anspruch 1, wobei die Siliziumteilchen einen durchschnittlichen Teilchendurchmesser (D₅₀) von 0,3 µm bis 100 µm aufweisen.

3. Negativelektrodenaktivmaterial auf Siliziumbasis nach Anspruch 1, wobei in dem Kern ein Gewichtsverhältnis der Siliziumteilchen zu dem Cetyltrimethylammonium 10:1 bis 10.000:1 beträgt.

4. Negativelektrodenaktivmaterial auf Siliziumbasis nach Anspruch 1, wobei das MXene mindestens eines ist, ausgewählt aus der Gruppe bestehend aus M₃X₂, M₄X₃, M₂X und M₄X₄, worin M ein Übergangsmetall und X mindestens eines aus Kohlenstoff und Stickstoff ist.

5. Negativelektrodenaktivmaterial auf Siliziumbasis nach Anspruch 4, wobei das MXene mindestens eines ist, ausgewählt aus der Gruppe bestehend aus Ti₃C₂, Ti₄C₃, Ti₂C, Ti₄N₃ and Ti₃CN.

6. Negativelektrodenaktivmaterial auf Siliziumbasis nach Anspruch 5, wobei das MXene Ti₃C₂ ist.

7. Negativelektrodenaktivmaterial auf Siliziumbasis nach Anspruch 1, wobei das MXene, das eine Hydroxylgruppe auf der Oberfläche davon umfasst, eine durchschnittliche Größe von 0,1 µm bis 50 µm aufweist.

8. Negativelektrodenaktivmaterial auf Siliziumbasis nach Anspruch 1, wobei das Negativelektrodenaktivmaterial auf Siliziumbasis das MXene, das eine Hydroxylgruppe auf der Oberfläche davon umfasst, in einer Menge von 0,5 Gew.-% bis 50 Gew.-% umfasst.

9. Negativelektrodenaktivmaterial auf Siliziumbasis nach Anspruch 5, wobei bei der SEM-EDS-Analyse des Negativelektrodenaktivmaterials auf Siliziumbasis Ti-Atome auf einer Oberfläche des Negativelektrodenaktivmaterials auf Siliziumbasis in einer Menge von 5 Atom-% oder mehr vorliegen.

10. Verfahren zur Herstellung eines Negativelektrodenaktivmaterials auf Siliziumbasis, wobei das Verfahren folgendes umfasst:
Mischen von Siliziumteilchen und Cetyltrimethylammoniumbromid und Aufbringen von Cetyltrimethylammonium auf die Siliziumteilchen, um einen Kern zu bilden; und
Mischen des Kerns und MXene, das eine Hydroxylgruppe auf einer Oberfläche davon umfasst, um das MXene auf dem Kern aufzubringen,
wobei das MXene, das eine Hydroxylgruppe auf der Oberfläche davon umfasst, die Hydroxylgruppe in einer Menge von 1 Gew.-% bis 10 Gew.-% umfasst.

11. Negative Elektrode, die das Negativelektrodenaktivmaterial auf Siliziumbasis nach Anspruch 1 umfasst.

12. Sekundärbatterie, die die negative Elektrode nach Anspruch 11 umfasst.

## Revendications

1. Matériau actif d'électrode négative à base de silicium comprenant :
un noyau comprenant des particules de silicium et du cétyltriméthylammonium disposé sur une surface des particules de silicium ; et
un MXène disposé sur le noyau et comprenant un groupe hydroxyle sur une surface de celui-ci,
dans lequel le MXène comprenant un groupe hydroxyle sur la surface de celui-ci comprend le groupe hydroxyle dans une quantité de 1 % en poids à 10 % en poids.

2. Matériau actif d'électrode négative à base de silicium selon la revendication 1, dans lequel les particules de silicium présentent un diamètre de particule moyen (D₅₀) de 0,3 µm à 100 µm.

3. Matériau actif d'électrode négative à base de silicium selon la revendication 1, dans lequel, dans le noyau, un rapport de poids des particules de silicium au cétyltriméthylammonium est 10:1 à 10 000:1.

4. Matériau actif d'électrode négative à base de silicium selon la revendication 1, dans lequel le MXène est au moins un élément quelconque sélectionné parmi le groupe consistant en M₃X₂, M₄X₃, M₂X, et M₄X₄, où M est un métal de transition et X est au moins un atome parmi le carbone et l'azote.

5. Matériau actif d'électrode négative à base de silicium selon la revendication 4, dans lequel le MXène est au moins un élément quelconque sélectionné parmi le groupe consistant en Ti₃C₂, Ti₄C₃, Ti₂C, Ti₄N₃, et Ti₃CN.

6. Matériau actif d'électrode négative à base de silicium selon la revendication 5, dans lequel le MXène est Ti₃C₂.

7. Matériau actif d'électrode négative à base de silicium selon la revendication 1, dans lequel le MXène comprenant un groupe hydroxyle sur la surface de celui-ci présente une taille moyenne de 0,1 µm à 50 µm.

8. Matériau actif d'électrode négative à base de silicium selon la revendication 1, dans lequel le matériau actif d'électrode négative à base de silicium comprend le MXène comprenant un groupe hydroxyle sur la surface de celui-ci dans une quantité de 0,5 % en poids à 50 % en poids.

9. Matériau actif d'électrode négative à base de silicium selon la revendication 5, dans lequel, dans une analyse SEM EDS du matériau actif d'électrode négative à base de silicium, les atomes de Ti sur une surface du matériau actif d'électrode négative à base de silicium se trouvent dans une quantité de 5 % atomique ou plus.

10. Procédé de préparation d'un matériau actif d'électrode négative à base de silicium, le procédé comprenant :
un mélange de particules de silicium et de bromure de cétyltriméthylammonium et une disposition de cétyltriméthylammonium sur les particules de silicium pour former un noyau ; et
un mélange du noyau et de MXène comprenant un groupe hydroxyle sur une surface de celui-ci pour disposer le MXène sur le noyau,
dans lequel le MXène comprenant un groupe hydroxyle sur la surface de celui-ci comprend le groupe hydroxyle dans une quantité de 1 % en poids à 10 % en poids.

11. Électrode négative comprenant le matériau actif d'électrode négative à base de silicium selon la revendication 1.

12. Batterie secondaire comprenant l'électrode négative selon la revendication 11.
